# EUROPEAN PATENT APPLICATION

(11) **EP 3 460 753 A1**
(43) Date of publication of application: **27.03.2019**
(21) Application number: 17380020.2
(22) Date of filing: 21.09.2017
(51) Int. Cl.: G06T 7/586

(54) **PHOTOMETRIC STEREO SYSTEM AND METHOD FOR INSPECTING OBJECTS WITH A ONE-SHOT CAMERA AND A COMPUTER PROGRAM**

(71) Applicant: Infaimon, SL, 08017 Barcelona (ES)
(72) Inventor: RUIZ LAO, Toni, 08225 Terrassa (ES)
(74) Representative: Juncosa Miró, Jaime

(57) **Abstract**

A system and method for inspecting objects with a one-shot camera with photometric stereo and a computer program.

The inspected object (9) is illuminated by different light sources (5, 6, 7 and 8) with a common intensity. The light sources (5, 6, 7 and 8) comprise LED emitters (50, 60, 70 and 80) of different wavelengths : Red, Green, Blue and Near-Infrared Radiation (NIR), and are arranged surrounding the optical axis (4) of the one shot camera. The object (9) may either be in a static position or in movement following a predetermined route on a surface (10) wherein several objects (9) are analysed consecutively. The different images are captured in one shot using a digital image capturing device (3) and the images obtained are: Albedo, Gradient, Range Map, Colour and NIR images which can then be processed and used as an aid to obtain a 3D reconstruction of the object.

## Description

### Technical field

The present invention relates generally to devices for capturing and processing a plurality of 2D images of an object with a one-shot camera using photometric stereoscopy techniques to be used for a 3D reconstruction of the inspected object. The one-shot camera is a digital image capturing device which exposes the whole sensor and acquires all the pixels at the same time. Said objects can be in movement or static.

In a first aspect of the proposed invention, a system is disclosed for inspecting an object using photometric stereoscopy.

In a second aspect of the proposed invention, a method is disclosed using said system.

In a third aspect, the invention provides a program comprising code instructions that when running in a computer system implements the method.

In the present invention, and regarding the position of a light source in an arrangement of light sources around a digital image capturing device defining an optical axis, a **slant angle (α)** is defined as the angle between the direction of the light emitted by a light source (comprising one or more emitters) towards an object or surface, and the optical axis to which said direction coincides, said optical axis being defined by a digital image capturing device, for instance a digital camera, perpendicular to a surface on which the object to be analysed is positioned.

According to the proposal of this invention the slant angle (α) must be the same for all the light sources used.

In the present invention, a **tilt angle (β)** is defined as the angle between two consecutive light sources of an arrangement of light sources including a plurality of light sources that define an imaginary plane parallel to the surface on which the object to be analysed is positioned.

With regard to the term one-shot camera', it will be understood a camera which expose the whole sensor and acquire all the pixels at the same time.

### State of the Art

Photometric stereoscopy is a well-known technology which is used in order to obtain a reconstruction of an object through the processing of different images captured.

The most common solution uses at least three different light sources with different directions of illumination. Said light sources illuminate an object enabling a capturing device to capture a series of primary images through which the following can be obtained: Albedo image, Gradient image and a Range Map image through a common optical path defined by the capturing device, wherein said capturing device may usually be a digital camera which includes a CMOS (Complementary Metal Oxide Semiconductor) or a CCD (Charge Coupled Device) sensors. The resolution and accuracy of the reconstructed 3D model depends on the geometric correlation and processing of the images obtained through said digital camera or an alternative capturing device.

The 3D reconstruction of the object is obtained through the local gradients of the surface extracted from the primary images. Those gradients can then be integrated to obtain a Range Map (also named Height Map or Z-Map) which is a 2D image where the pixel values correspond to height dimension of each pixel for that precise point of the objects surface.

In parallel to the Gradient and Range Map images, another 2D image, called Albedo, is also obtained which is a 2D image representation of the ratio of light reflected to the light received by the object.

The use of this technology is known in the state of the art, as seen in the US2016098840, which discloses a system, method and computer program for obtaining a reconstruction, specifically a raised relief map, of the surface of a static object from a plurality of images of said object using at least three different light sources in order to obtain said plurality of images through the use of a digital camera in a fixed positon.

The illumination sources used in this invention may be of any preferred type, such as: sources containing LEDs (Light Emitting Diodes) emitting under different wavelengths such as Red, Green and Blue (RGB) light, a simple white source, ultra-violet (UV) radiation, Infrared (IR) or Near-Infrared Radiation (NIR) or any other appropriate radiation source as well as fluorescent, halogen or tungsten light sources. However, in the embodiments of the proposed method Red, Green and Blue (RGB) and Near-Infrared Radiation (NIR) sources containing LED emitters are used.

The digital camera captures a plurality of primary images through which three different model components are obtained including the Albedo and gradient of the object which are then processed by using a computer program a set model function in order to obtain the raised relief map of the surface of the analysed object.

One of the possible fields of application of this technology is in product quality control, specifically visual inspection of products in order to detect small defects on the surface of the object being analysed, such as: scratches, holes, protrusions and printing defects amongst many others depending on the acquisition method used. The objects being analysed may be in movement following a predetermined route defined a by a conveyor mechanism or static positioned on a surface.

There are currently two main techniques that apply photometric stereoscopy to analyse moving objects:
- The first technique uses colour lighting sources, specifically RGB light sources, and a colour digital camera that captures the three primary colour images in one shot.

However, by only using three images the resulting 3D reconstruction model of the object does not have a reliable accuracy.
- The second technique uses a monochrome digital camera comprising CMOS sensors with a plurality of light sources illuminating an equal number of regions of interest (ROIs) positioned sequentially along a conveyor mechanism through which the objects are transported to be analysed. This technique enables the use of a plurality of primary images, equal to the number of ROIs, and overlapping them to achieve a 3D model reconstruction based on the information of an external encoder (timestamp of each image, lighting synchronization and the speed of the conveyor mechanism).

However, this technique requires high performance hardware equipment in order to synchronise the different light sources for each ROI and the precision of the encoded information regarding the speed of the conveyor mechanism isn't always accurate which leads to a reconstructed model of each analysed object with a varying degree of resolution and precision.

The present invention provides a solution to the current limitations exposed through the use of a device, particularly a digital camera, which includes either a DUAL-sensor or a QUAD-sensor configuration which enables the processing of the different wavelengths emitted by the plurality of light sources and their corresponding emitters onto the object to be analysed. The different wavelengths obtained through the common optical axis from the object are separated through the use of a dichroic beam splitter prism situated inside the digital camera device.

This strategy to simultaneously photograph images in multiple wavelength band regions by means of a CCD digital camera including several different CCD elements and a dichroic mirror is known in the art for example by JPH04329322 and US9258468.

However, in the present invention said digital camera including either a DUAL-sensor or a QUAD-sensor configuration operates in association with a plurality of different light sources with a specific arrangement relative to the object to be inspected, wherein, at least one of said light sources is formed by electromagnetic radiation emitters of a non-visible spectrum in order to obtain an additional image which will lead to a much more precise 3D reconstruction of the analysed object. Therefore, the cited digital camera enables the capture of four primary images (Red, Green, Blue and Near Infrared Radiation) in a single shot and without using or requiring any external encoder signal, wherein the analysed object can be on a moving surface, such as a conveyor belt, conveyor roller or any other conveyor mechanism which allows a steady flow of objects to be analysed.

The present invention may also be used for objects in a static position.

### Brief description of the invention

The present invention provides means for capturing and simultaneously processing a plurality of images. The images obtained of any given object to be analysed are: an Albedo image, a Gradient image, a Range Map image, a Colour image and a Near-Infrared radiation (NIR) image. These images are captured with a single shot from a digital image capturing device, such as a camera, and then processed in order to further analyse the object. The Gradient and Range Map images provide a 3D top view of the object that can be used with additional images of different views of the object to obtain a 3D reconstruction of the object.

According to one aspect of the invention, a system is provided for capturing and processing a plurality of images of an object using photometric stereoscopy which includes several of the cited components known in the art:
- several light sources;
- each of said light sources including one or more emitters, operating under wavelengths of the visible electromagnetic spectrum;
- a digital image capturing device, such as a digital camera for capturing and processing three different images, including: Albedo, Gradient and Range Map images, wherein a capturing portion of the digital image capturing device is positioned perpendicular to a surface, on which the object to be inspected is located, at the time of its inspection, defining a common optical axis.

The system of the present invention is mainly characterized by the following additional features:
- the light sources include at least four different light sources with different wavelengths, one of them from the non-visible electromagnetic radiation spectrum, including Near-Infrared Radiation (NIR);
- the digital image capturing device used is configured to simultaneously capture and process in one single shot, at least two different images of different wavelengths wherein one of said images is from the non-visible electromagnetic radiation spectrum and said further processing providing a colour image and an image from the non-visible electromagnetic radiation spectrum;
- the intensity received by said digital image capturing device from each of said four different light sources is the same (this can be obtained by either adjusting each of the light sources equalizing their intensity outputs or correcting slight differences of the light intensity outputted by the light sources by correction means (filtering and adjustments) at the reception area of the image capturing device);
- the slant angle α of each of the four light sources is adjustable, wherein the slant angles α of the light sources directed towards a given object to be inspected are the same, and in the range of α ∈ [30 to 60] angular degrees, and
- the light sources are arranged on an imaginary common plane parallel to a surface surrounding the optical axis of the digital image capturing device and equidistant from said optical axis and with a tilt angular angle β among them, comprised between 80 and 100 angular degrees.

The object to be inspected positioned on the surface can be in movement following a predetermined route or static on said surface.

The digital camera to be used can include at least two and up to a maximum of four sensors according to the DUAL-sensor or QUAD-sensor configurations, respectively, and a dichroic beam splitter prism which separates the different wave-lengths from each kind of emitter to be processed independently.

The system with the so detailed configuration provides through the digital image capturing device (digital camera and processor integrated or associated) five different images: Albedo, Gradient, Range Map, Colour and Near-Infrared Radiation image.

According to a preferred embodiment said four different light sources comprises: a first light source including one or more Red LED emitters, a second light source with one or more Green LED emitters, a third light source including one or more Blue LED emitters and a fourth light source with one or more NIR emitters.

The four different light sources are supported in a structure wherein said structure may be selected from: a dome shaped structure, a ring shaped structure, a square shaped structure, among others. Light incidence from the different light sources may be selected from two options: a direct light or a diffused light, depending on the properties of the objects surface.

In a specific embodiment, the four different light sources are supported in the structure, which is dome shaped, with an opening on the top of said structure through which a capturing part of the digital image capturing device (for example the objective of a camera) is positioned defining the cited common optical axis. The opening, through which the capturing part of the digital image capturing device is positioned, may be located in a centre-point of the structure or non-centred with a laterally displaced opening relative to the centre of the structure in order to avoid possible reflections. The displacement of the opening from the centre-point is between 10° and 30° angular degrees in a dome shape structure depending on the width of the object analysed. The most common displacement is 20° angular degrees for objects with a width between 50mm and 150 mm.

In addition to the slant angle α, the four different light sources are arranged in a circular pattern inside the structure, defined by a tilt angle β, equidistantly around the common optical axis on an imaginary plane defined by the position of the four light sources and parallel to the surface wherein the defined tilt angle β is comprised between 80 and 100 angular degrees.

In a preferred embodiment of the invention, the tilt angle β for the four different light sources is β = 90 angular degrees and therefore they are arranged equidistantly in a circular pattern on said imaginary plane parallel to the surface on which the object is positioned.

The present invention also discloses a method for inspecting an object using photometric stereoscopy using the detailed system.

The method for inspecting an object in real time using photometric stereo, by capturing and processing a plurality of images of the object using photometric stereoscopy comprises the following steps already known in the art:
a) illuminating the object with several light sources operating under wavelengths of the visible electromagnetic spectrum and located in different positions around the object;
b) capturing with a digital image capturing device and processing three different images, including: Albedo, Gradient and Range Map images, said digital image capturing device being positioned perpendicular to a surface, on which the object to be inspected is situated, at the time of its inspection, defining a common optical axis;
while in the method of this invention, in said step a) one of said light sources with different wavelengths, is from the non-visible electromagnetic radiation spectrum, including Near-Infrared Radiation (NIR), and the method further comprises:
- controlling said illuminating of the different light sources so that the intensity received by said digital image capturing device from each of said four different light sources is the same;
- positioning the light sources on an imaginary common plane, parallel to the surface, surrounding the optical axis of the digital image capturing device and equidistant from this optical axis and with a tilt angular angle β among said light sources, comprised between 80 and 100 angular degrees;
- adjusting the slant angle α of each of the four light sources, in order that all the slant angles of the light sources for a given object to be inspected being the same; and
- simultaneously capturing and processing in one single shot at least two different images of different wavelength one of said images pertaining to said non-visible electromagnetic radiation spectrum and said processing further providing at least a colour image and an image from the non-visible electromagnetic radiation spectrum,
wherein said digital image capturing device providing five different images: Albedo, Gradient, Range Map, Colour and Radiation image.

Furthermore, the method, proposes:
- That the object to be inspected is positioned on the surface and is in movement following a predetermined route or it is static.
- The tilt angular angle of the four light sources is, common, i.e. β = 90 angular degrees.
- A first light source comprises one or more Red LED emitters, a second light source comprises one or more Green LED emitters, a third light source comprises one or more Blue LED emitters and a fourth light source comprises one or more NIR emitters.
- The defined slant angle α, common to the four different light sources, is selected in the range of α ∈ [30 to 60] angular degrees.

In addition to the system and method previously disclosed, this invention provides a computer program product comprising code instructions that when running in a computer system implements the described method.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:
- **Figure 1** illustrates a schematic frontal view of a system used to capture and process the plurality of images, wherein the, dome shaped, structure has only been outlined, thus enabling the different light sources to be viewed.
- **Figure 2** illustrates a schematic top view of an embodiment of the system used to capture and process the plurality of images, wherein the, dome shaped, structure has only been outlined, thus enabling some of the different light sources to be viewed.
- **Figure 3a and 3b****,** respectively illustrate the DUAL-sensor or the QUAD-sensor configuration known in the art, which may be placed inside the capturing device as well as the dichroic beam splitter prism used in both possible configurations, wherein said capturing device is usually a digital camera.
- **Figure 4** is a flow chart illustrating the steps followed in order to obtain the 5 output images at the end of the process.

### Detailed description of an embodiment

The foregoing and other advantages and features will be more fully understood from the following detailed description of an embodiment with reference to the accompanying drawings, to be taken in an illustrative and not limitative, in which:

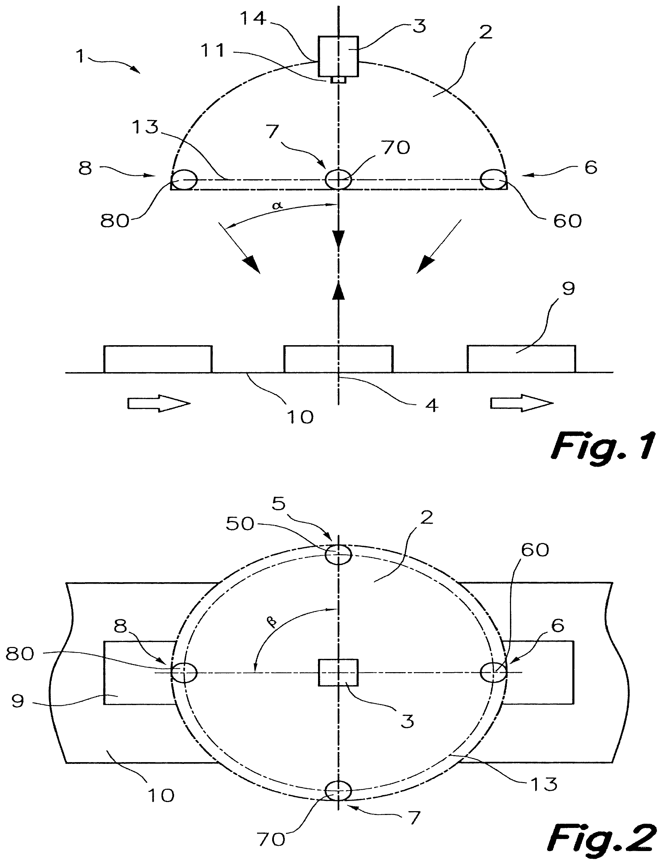

**Figure 1** illustrates a schematic frontal view of a system 1 for capturing and processing a plurality of images of an object 9 using photometric stereoscopy wherein a structure 2, which contains several light sources 5, 6, 7 and 8, has only been outlined in order to show the different light sources.

In one embodiment of said invention, the structure 2 is dome shaped and at the top centre-point of said dome shaped structure 2 there is an opening 14 through which a capturing part 11 of the digital image capturing device 3 is positioned in order to capture and process the images, wherein said device 3 is a digital camera and its position defines a common optical axis 4, generally vertical.

However the opening 14, through which the capturing part 11 of the digital image capturing device 3 is positioned, may be laterally displaced relative to the centre of the structure 2 in order to avoid possible reflections. The displacement of the opening 14 from the centre-point is between 10° and 30° angular degrees in a dome shape structure depending on the width of the object 9 analysed. The most common displacement is 20° angular degrees for objects 9 with a width between 50mm and 150 mm.. The different light sources 5, 6, 7 and 8 include, respectively, one or more emitters 50, 60, 70 and 80. Said light sources 5, 6, 7 and 8 are directed towards the surface 10 on which the object 9 to be analysed is positioned by defining a slant angle α which is the same for all of them. As indicated, the slant angle α is defined as the angle formed between the common optical axis 4 and the direction of the light sources 5, 6, 7 and 8 coinciding with said common optical axis 4.

**Figure 2** illustrates a schematic top view of the system 1 for capturing and processing a plurality of images of an object 9 using photometric stereoscopy wherein a structure 2, which contains one or more light sources 5, 6, 7 and 8, has only been outlined in order to show the position of the different light sources 5, 6, 7 and 8 inside said structure 2, which in this particular embodiment is dome shaped.

The different light sources 5, 6, 7 and 8 and their respective emitters 50, 60, 70 and 80 are positioned, in one embodiment of said invention, in a circular pattern on an imaginary plane 13 containing said four light sources 5, 6, 7 and 8 and parallel to the surface 10, around the common optical axis 4 wherein each light source 5, 6, 7 and 8 is distanced from the next according to a tilt angle β.

The tilt angle β, in this embodiment of said invention, is the same for all light sources 5, 6, 7 and 8 wherein β = 90 angular degrees and therefore they are arranged equidistantly in a circular pattern on the imaginary plane 13 parallel to the surface 10.

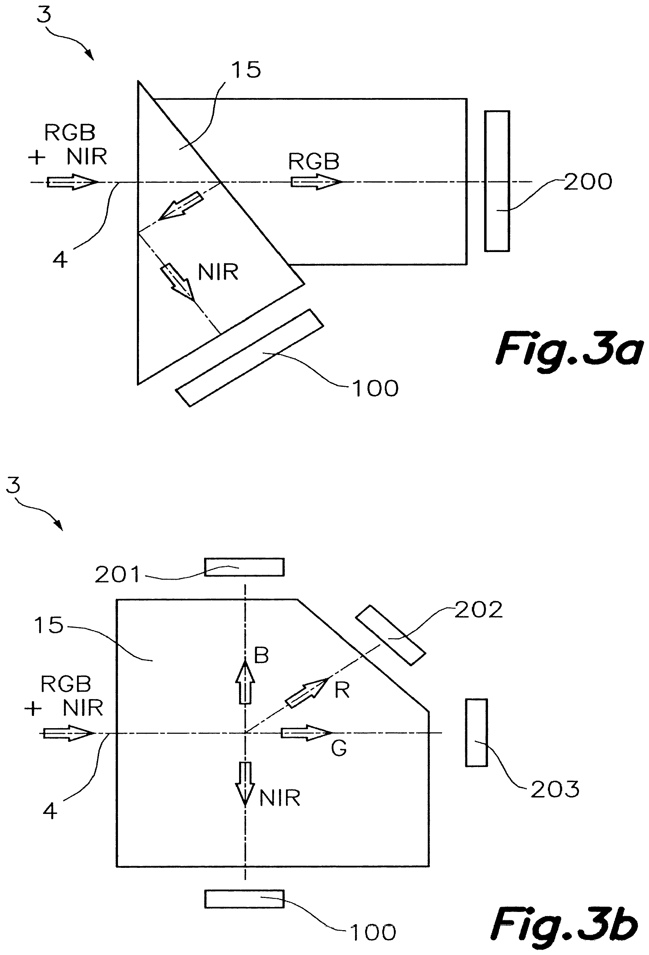

**Figures 3a** and **3b** illustrate respectively the DUAL-sensor or QUAD-sensor configuration Known in the art, used inside the digital camera.

The DUAL-sensor configuration uses a dichroic beam splitter prism 15 in order to separate the RGB wavelengths from the NIR wavelengths which are reflected from the analysed object 9, and convey the separated beams towards the camera through the common optical axis 4. Once the different wavelengths have been separated into RGB and NIR, they are directed towards their respective RGB sensor 200 and NIR sensor 100 to be processed.

The QUAD-sensor configuration also uses a dichroic beam splitter prism 15, with a different shape, in order to separate the four different wavelengths: Red, Green, Blue and NIR which are reflected from the analysed object 9 and convey the separated beams towards the camera through the common optical axis 4. Once the different wavelengths have been separated, they are directed towards their respective sensor: a Red sensor 202, a Blue sensor 201, a Green sensor 203 and the NIR sensor 100 in order to be processed.

Both configurations may be used for an object 9 on a moving surface 10 or the object 9 in static conditions with the cited arrangement of light sources and processing of the sensor data as disclosed. In one possible embodiment of the invention, the surface 10 is a line-shaft roller, a roller conveyor, a conveyor belt or any other configuration which enables a steady flow of objects 9 to be analysed.

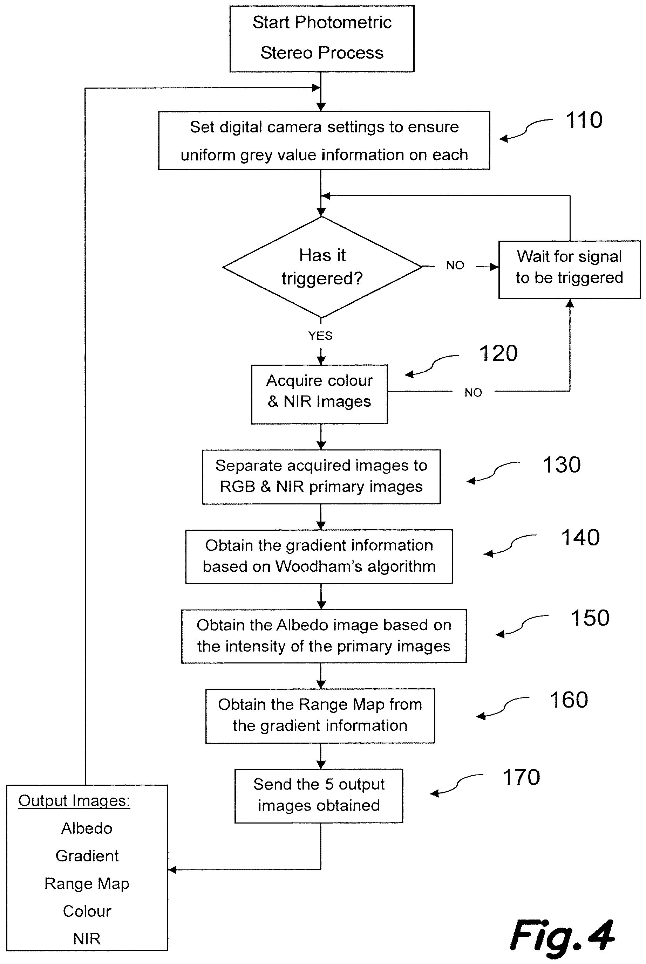

**Figure 4** illustrates a flow chart with the different steps that the method goes through in order to obtain the five different output images 170: an Albedo image 150, a Gradient image 140, a Range Map image 160, a Colour image 120 and a NIR image 120.

The Gradient image 140 contains the partial derivative of the surface of the object and is obtained through the use of Woodham's algorithm. The Gradient 140 can be used as input to obtain the Range Map 160 of the object 9.

The Albedo image 150 describes the ratio of reflected radiation to incident radiation and has a value between one (white surface) and zero (black surface) from the object 9. Thus, the albedo 150 is a characteristic of the surface of the object 9

The Range Map image 160 is an image in which the pixel values correspond to a relative height of the different points of the analysed object 9.

The Colour image 120 is an image composed from the R-G-B information processed by the sensor 200 or sensors 201, 202 and 203. It is similar to a standard colour digital camera illuminated only 270°. In most cases, we could use this image for standard colour image processing.

The NIR image 120 is a RAW image directly processed by the NIR sensor 100. It is illuminated only 90° but in most cases, is enough to get NIR information of the scene.

The separation of the NIR and RGB 130 is done through a dichroic beam splitter prism 15 inside the digital camera which separates the different wavelengths and redirects them to their corresponding sensors.

It will be understood that various parts of one embodiment of the invention can be freely combined with parts described in other embodiments of the invention, even if said combination has not been explicitly described, provided there is no ensuing prejudice in such combination.

## Claims

1. System for inspecting an object in real time using photometric stereo, by capturing and processing a plurality of images of said object (9) comprising:
- several light sources;
- said light sources including one or more emitters, operating under wavelengths of the visible electromagnetic spectrum;
- a digital image capturing device (3) for capturing and processing three different images, including: Albedo, Gradient and Range Map images, wherein said digital image capturing device (3) is positioned perpendicular to a surface (10), on which the object (9) to be inspected is situated, at the time of its inspection, defining a common optical axis (4);
**characterised in that:**
- said light sources include four different light sources (5, 6, 7, 8) with different wavelengths, one of them from the non-visible electromagnetic radiation spectrum, including Near-Infrared Radiation, NIR;
- said digital image capturing device (3) being configured and adapted to simultaneously capture and process in one single shot, at least two different images of different wavelengths wherein one of said images is from the non-visible electromagnetic radiation spectrum and said further processing providing a colour image and an image from the non-visible electromagnetic radiation spectrum;
- the intensity received by said digital image capturing device (3) from each of said four different light sources (5, 6, 7, 8) is the same;
- the slant angle α of each of the four light sources (5, 6, 7, 8) is adjustable, wherein the slant angles α of the light sources (5, 6, 7, 8) directed towards a given object (9) to be inspected are the same; and
- the light sources (5, 6, 7, 8) are arranged on an imaginary common plane (13), parallel to the surface (10), surrounding the optical axis (4) of the digital image capturing device (3) and equidistant from said optical axis (4) and with a tilt angular angle β among them, comprised between 80 and 100 angular degrees,
wherein the object to be inspected (9) positioned on the surface (10) is in movement following a predetermined route or static on said surface (10), and wherein said digital image capturing device (3) provides five different images: Albedo, Gradient, Range Map, Colour and Near-Infrared Radiation image.

2. System according to claim 1, wherein the tilt angular angle of the four light sources (5, 6, 7, 8) is β = 90 angular degrees.

3. System according to claim 2, wherein a first light source (5) comprises one or more Red LED emitters (50), a second light source (6) comprises one or more Green LED emitters (60), a third light source (7) comprises one or more Blue LED emitters (70) and a fourth light source (8) comprises one or more Near-Infrared Radiation, NIR, emitters (80).

4. System according to claim 1, wherein the defined slant angle common to the four different light sources (5, 6, 7, 8), is in the range of α ∈ [30 to 60] angular degrees.

5. System according to any of the previous claims, wherein the digital image capturing device (3) for capturing and processing the images is a digital camera in association with an imaging processor.

6. System according to claim 5, wherein said digital camera includes at least two (100 and 200) and up to a maximum of four sensors (100, 201, 202 and 203) and a dichroic beam splitter prism (15) which separates the different wave-lengths from each kind of emitter (50, 60, 70 and 80) to be processed independently.

7. System according to any of the previous claims, wherein the four different light sources (5, 6, 7, 8) are supported in a structure (2), dome shaped, with an opening (14) on the top of said structure (2) through which a capturing part (11) of the digital image capturing device (3) is positioned defining the common optical axis (4).

8. System according to claim 7, wherein the opening (14), through which the capturing part (11) of the digital image capturing device (3) is positioned, is located in a centre-point of the structure (2) or is a laterally displaced opening (14) relative to the centre of the structure (2) in order to avoid reflections wherein the displacement of the opening from the centre-point is between 10° and 30° angular degrees in said dome shape structure depending on the width of the object analysed.

9. Method for inspecting in real time an object (9) using photometric stereo, by capturing and processing a plurality of images of the object (9) using photometric stereoscopy comprising:
a) illuminating the object (9) with several light sources (5, 6, 7, 8) operating under wavelengths of the visible electromagnetic spectrum and located in different positions around the object (9);
b) capturing with a digital image capturing device (3) and processing three different images, including: Albedo, Gradient and Range Map images, said digital image capturing device (3) being positioned perpendicular to a surface (10), on which the object (9) to be inspected is situated, at the time of its inspection, defining a common optical axis (4);
**characterised in that** in said step a) one of said light sources (5, 6, 7, 8) with different wavelengths, is from the non-visible electromagnetic radiation spectrum, including Near-Infrared Radiation, NIR, an **in that** the method further comprises:
- controlling said illuminating of the different light sources (5, 6, 7, 8) so that the intensity received by said digital image capturing device (3) from each of said four different light sources (5, 6, 7, 8) is the same;
- positioning the light sources (5, 6, 7, 8) on an imaginary common plane (13), parallel to the surface (10), surrounding the optical axis (4) of the digital image capturing device (3) and equidistant from this optical axis (4) and with a tilt angular angle β among said light sources (5, 6, 7, 8), comprised between 80 and 100 angular degrees;
- adjusting the slant angle α of each of the four light sources (5, 6, 7, 8), in order that all the slant angles of the light sources (5, 6, 7, 8) for a given object (9) to be inspected being the same; and
- simultaneously capturing and processing in one single shot at least two different images of different wavelength one of said images pertaining to said non-visible electromagnetic radiation spectrum and said processing further providing at least a colour image and an image from the non-visible electromagnetic radiation spectrum,
wherein said digital image capturing device (3) providing five different images: Albedo, Gradient, Range Map, Colour and Near-Infrared Radiation image.

10. Method, according to claim 9, wherein the object (9) to be inspected is positioned on the surface (10) and is in movement following a predetermined route.

11. Method, according to claim 9, wherein the object (9) to be inspected positioned on the surface (10) is static.

12. Method, according to claim 9, wherein the tilt angular angle of the four light sources (5, 6, 7, 8) is β = 90 angular degrees.

13. Method, according to claim 9, wherein a first light source (5) comprises one or more Red LED emitters (50), a second light source (6) comprises one or more Green LED emitters (60), a third light source (7) comprises one or more Blue LED emitters (70) and a fourth light source (8) comprises one or more NIR emitters (80).

14. Method, according to claim 9, wherein the defined slant angle α, common to the four different light sources (5, 6, 7, 8), is selected in the range of α ∈ [30 to 60] angular degrees.

15. A computer program product comprising code instructions that when running in a computer system implements the method of claim 9 or any of the depending claims 10 to 14.
